# EUROPEAN PATENT SPECIFICATION

(11) **EP 4 382 477 B1**
(45) Date of publication and mention of the grant of the patent: **23.04.2025**
(21) Application number: 23205266.2
(22) Date of filing: 23.10.2023
(51) Int. Cl.: C01B 3/38, C10G 2/00, C10J 3/46, C10K 1/00, C10K 1/10, C10K 3/02, C10K 3/04, C01B 3/44

(54) **MANUFACTURING METHOD AND MANUFACTURING APPARATUS OF SYNGAS, AND MANUFACTURING METHOD OF LIQUID HYDROCARBON USING THE SAME**
HERSTELLUNGSVERFAHREN UND HERSTELLUNGSVORRICHTUNG FÜR SYNTHESEGAS SOWIE HERSTELLUNGSVERFAHREN FÜR FLÜSSIGEN KOHLENWASSERSTOFF DAMIT
PROCÉDÉ DE FABRICATION ET APPAREIL DE FABRICATION DE GAZ DE SYNTHÈSE, ET PROCÉDÉ DE FABRICATION D'HYDROCARBURE LIQUIDE L'UTILISANT

(30) Priority: 15.11.2022 KR 20220152538
(43) Date of publication of application: 12.06.2024
(73) Proprietor: SK Innovation Co., Ltd., Seoul 03188 (KR)
(72) Inventor: JEON, Hee Jung, 34124 Daejeon (KR); KIM, Ok Youn, 34124 Daejeon (KR); YUN, Dong Min, 34124 Daejeon (KR)
(74) Representative: Frick, Robert

(56) References cited:
- EP-A1- 2 584 023
- EP-B1- 2 673 069
- KR-B1- 102 097 283
- US-A1- 2007 256 359

## Description

### TECHNICAL FIELD

The present invention relates to a manufacturing method and a manufacturing apparatus of syngas, and in particular, to a manufacturing method and a manufacturing apparatus of syngas which may increase a manufacturing yield of syngas and minimize carbon dioxide emission. In addition, the present invention relates to a manufacturing method of a liquid hydrocarbon from syngas manufactured by the manufacturing method and the manufacturing apparatus of syngas.

### BACKGROUND

Organic wastes may seriously damage the environment by decay when landfilled, and should be discarded through a prescribed treatment process after collecting by their properties when discarded. However, since simple disposal of the organic wastes requires securing treatment facilities and consuming a large amount of manpower and is more wasteful than productive, methods and technologies for recycling organic wastes have been developed in recent years. Representatively, a gasification process technology in which syngas is produced using organic wastes and converted into a high value-added product for energization, may be mentioned.

The gasification process generally refers to a series of processes of reacting carbonaceous raw materials such as coal, organic wastes, and biomass under the supply of water vapor, oxygen, carbon dioxide, or a mixture thereof to convert the raw materials into syngas formed of hydrogen and carbon monoxide as the main components, in which the "syngas" refers to mixed gas which is usually produced by a gasification reaction and contains hydrogen and carbon monoxide as the main component and may further include carbon dioxide and/or methane.

The gasification process technology has expanded to a technology of producing fuels and raw materials of various compounds, and for example, the syngas may be used as the raw material of a Fischer-Tropsch synthesis reaction to manufacture high value-added products such as light oil, heavy oil, diesel oil, jet oil, and lube oil. Besides, it is known that hydrogen in the syngas which is the main product of the gasification process is used to be applied to hydrogen power generation, ammonia manufacture, an oil refining process, and the like, and methanol manufactured from the syngas may be used to obtain high value-added chemicals such as acetic acid, olefin, dimethylether, aldehyde, fuel, and an additive.

Recently, as a process for manufacturing syngas, a gasification process using a catalyst has been carried out, but due to the formation of coke and the like in the gasification process, the catalyst is inactivated to cause process trouble in continuous operation. In addition, for securing economic feasibility, relatively expensive catalysts need to be recovered, but in order to recover catalyst discharged in the state in which coke is agglomerated, a plurality of subsequent processes (such as hot-water extraction and lime digestion) should be carried out, and thus, process efficiency is significantly deteriorated.

In addition, since the conventionally performed gasification process of organic wastes has a significantly low manufacturing yield of syngas which may be converted into a high value-added product of 30% or less and has poor productivity, commercialization using the process is limited. Further, in terms of environmental protection, it is preferred to suppress CO₂ emission, but since the gasification reaction product of organic wastes contains CO₂ in addition to H₂ and CO, carbon dioxide emission is higher than that in landfill or pyrolysis treatment, and thus, the gasification process has a serious problem of rather causing more environmental pollution.

EP 2 584 023 A1 discloses a method of producing a syngas composition from biomass raw-material and KR 102 097 283 B1 discloses a method for preparing synthetic natural gas from synthesis gas obtained by gasifiying one or more of biomass, solid carbon and coal.

Thus, a manufacturing method and a manufacturing apparatus of syngas which increases a manufacturing yield of syngas which may be converted into a high value-added product and minimize carbon dioxide formation in the gasification process of organic wastes and a manufacturing apparatus of syngas are needed.

### SUMMARY

The present invention aims to providing a manufacturing method and a manufacturing apparatus of syngas which have a significantly improved manufacturing yield of syngas from organic wastes.

The present invention further aims to providing a manufacturing method and a manufacturing apparatus of syngas which may minimize carbon dioxide formation.

Against this background, the present invention provides a method of manufacturing a syngas, the method comprising: (S1) heat-treating organic waste under hydrogen in a first reactor; (S2) separating hydrogen from a product of (S1) and recovering a first mixed gas from which hydrogen has been removed; (S3) reforming the first mixed gas recovered in (S2) with water vapor under a catalyst in a second reactor; (S4) separating the catalyst and carbon dioxide from a product of (S3) and recovering a second mixed gas from which carbon dioxide has been removed; (S5) converting carbon dioxide separated in (S4) into carbon monoxide through a reverse Boudouard reaction in a third reactor; and (S6) mixing hydrogen separated in (S2), the second mixed gas recovered in (S4), and carbon monoxide converted in (S5) to produce syngas.

In an exemplary embodiment, the product of (S1) may include methane, hydrogen, carbon monoxide, and carbon dioxide.

In an exemplary embodiment, 20 vol% or more of methane may be included with respect to the total volume of the product of (S1).

In an exemplary embodiment, the first mixed gas of (S2) may include methane, carbon monoxide, and carbon dioxide, and the product of (S3) may include carbon monoxide, hydrogen, and carbon dioxide.

In an exemplary embodiment, in (S3), the catalyst may be a composite catalyst in which a metal hydride is supported on zeolite.

In an exemplary embodiment, the metal hydride may include at least one selected from nickel, vanadium, iron, platinum, palladium, or ruthenium.

In an exemplary embodiment, the zeolite may include ZSM-5, ZSM-11, USY zeolite, ferrierite, mordenite, MCM-22, SUZ-4, or L-type zeolite.

In an exemplary embodiment, (S5) may further include (S5-1) introducing the catalyst separated in (S4) to the third reactor and regenerating the catalyst through a reverse Boudouard reaction; and (S5-2) recirculating and resupplying the regenerated catalyst to (S3).

In an exemplary embodiment, (S1) may be performed at a temperature of 500 to 900°C and a pressure of 300 to 600 kPa.

In an exemplary embodiment, (S2) may be performed at a temperature of 5 to 50°C and a pressure of 800 to 1200 kPa.

In an exemplary embodiment, the reverse Boudouard reaction of (S5) may be performed at a temperature of 800 to 1000°C and a pressure of 300 to 500 kPa.

In an exemplary embodiment, the syngas produced in (S6) may include hydrogen and carbon monoxide and a molar ratio between the hydrogen and the carbon monoxide may satisfy 1.8 to 2.2.

In an exemplary embodiment, the molar ratio between the hydrogen and the carbon monoxide may be adjusted by controlling the reverse Boudouard reaction depending on a flow rate of the hydrogen separated in (S2), the carbon monoxide produced in (S3), or the carbon monoxide converted in (S5).

In an exemplary embodiment, the molar ratio between the hydrogen and the carbon monoxide may be adjusted by supplying separate carbon dioxide to (S3) depending on the flow rate of the hydrogen separated in (S2), the carbon monoxide produced in (S3), or the carbon monoxide converted in (S5).

In an exemplary embodiment, the organic wastes in (S1) may be at least one selected from waste plastic, solid wastes, biomass, waste oil, or waste tires.

In an exemplary embodiment, before (S2), purifying the mixed gas produced in (S1) may be further included.

The invention further relates to an apparatus for manufacturing syngas by a method of the invention, the apparatus comprising: a first reactor configured to receive a feed of organic waste and allow for a gasification reaction under hydrogen to be performed; a hydrogen separation unit configured to receive a product from the first reactor, to separate hydrogen, and to recover a first mixed gas from which hydrogen has been removed; a second reactor configured to receive a first mixed gas which hydrogen has been removed from the hydrogen separation unitand to allow for a water vapor reforming reaction to be performed under a catalyst; a carbon dioxide separation unit configured to receive a product from the second reactor, to separate carbon dioxide, and to recover a second mixed gas from which carbon dioxide has been removed; a third reactor configured to receive carbon dioxide separated from the carbon dioxide separation unit and to allow for a reverse Boudouard reaction to be performed; and a syngas production unit configured to receive and mix hydrogen separated from the hydrogen separation unit, second mixed gas recovered from the carbon dioxide separation unit, and carbon monoxide recovered from the third reactor, and to allow for a production of syngas.

In an exemplary embodiment, the first reactor may include a fluidized bed reactor or a fixed bed reactor.

In an exemplary embodiment, the second reactor may include a fluidized bed reactor.

In an exemplary embodiment, the third reactor may include a fluidized bed reactor.

In an exemplary embodiment, the hydrogen separation unit may include a pressure swing adsorption (PSA) device.

In an exemplary embodiment, a purification unit may be further included between the first reactor and the hydrogen separation unit.

In an exemplary embodiment, the manufacturing apparatus of syngas may further include a cyclone configured to separate catalyst from a product of the second reactor; a supply line configured to supply separated catalyst from the cyclone to the third reactor; and a recirculation line configured to resupply regenerated catalyst from the third reactor to the second reactor.

Yet further, the invention relates to a method of manufacturing a liquid hydrocarbon, the method comprising: manufacturing syngas by a method of the invention; supplying the syngas to a fourth reactor; and performing a Fischer-Tropsch synthesis reaction in the fourth reactor.

In an exemplary embodiment, the fourth reactor may include a fluidized bed reactor.

In an exemplary embodiment, the liquid hydrocarbon may include naphtha having a boiling point of 150°C or lower, kerosene having a boiling point of 150 to 265°C, LGO having a boiling point of 265 to 340°C, and VGO having a boiling point of 340°C or higher.

Other features and aspects of the invention will be apparent from the following detailed description, the drawings, and the claims.

### BRIEF DESCRIPTION OF THE DRAWINGS

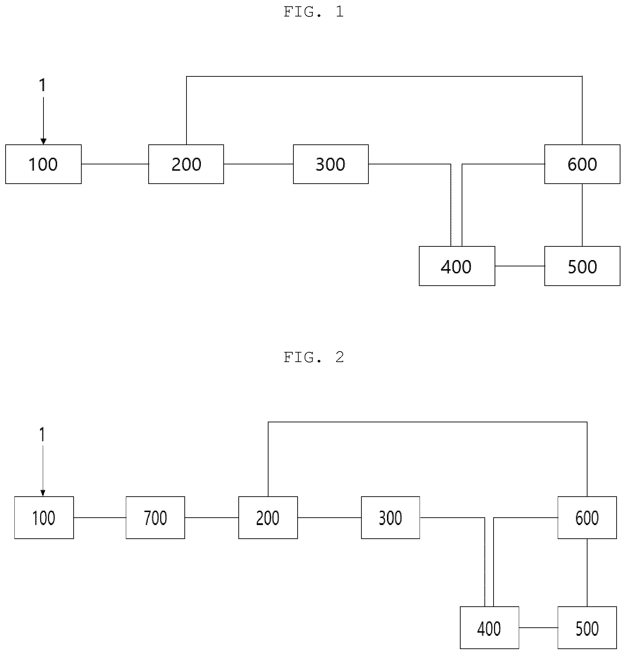

FIG. 1 illustrates a block diagram of a manufacturing method of syngas according to an exemplary embodiment of the present invention, including a first reactor, a hydrogen separation unit, a second reactor, a carbon dioxide separation unit, a third reactor, and a syngas production unit.
FIG. 2 illustrates a block diagram of a manufacturing method of syngas according to an exemplary embodiment of the present invention, including a first reactor, a purification unit, a hydrogen separation unit, a second reactor, a carbon dioxide separation unit, a third reactor, and a syngas production unit.

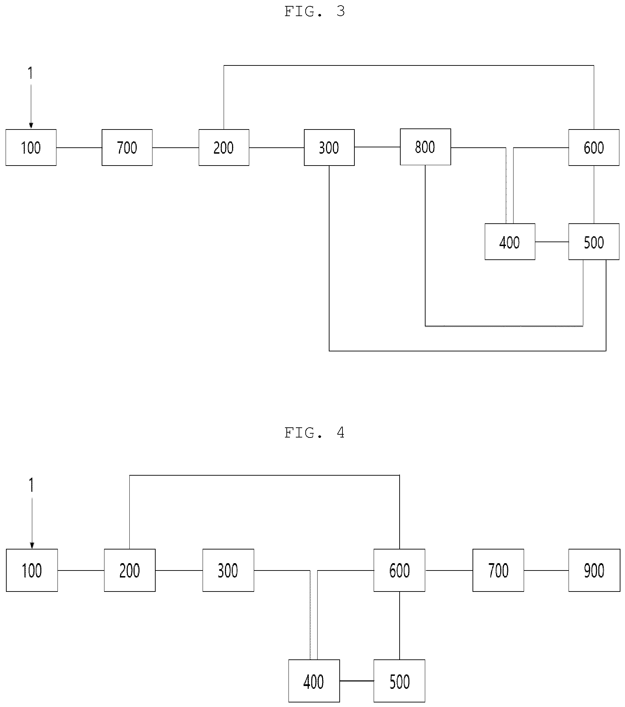

FIG. 3 illustrates a block diagram of a manufacturing method of syngas according to an exemplary embodiment of the present invention, including a first reactor, a purification unit, a hydrogen separation unit, a second reactor, a cyclone, a carbon dioxide separation unit, a third reactor, and a syngas production unit.
FIG. 4 illustrates a block diagram of a manufacturing method of syngas according to an exemplary embodiment of the present invention, including a first reactor, a hydrogen separation unit, a second reactor, a carbon dioxide separation unit, a third reactor, a syngas production unit, and a fourth reactor.

### [Detailed Description of Main Elements]

1: feed, 100: first reactor, 200: hydrogen separation unit, 300: second reactor, 400: carbon dioxide separation unit, 500: third reactor, 600: syngas production unit, 700: purification unit, 800: cyclone, 900: Fourth reactor

### DETAILED DESCRIPTION OF EMBODIMENTS

In the present specification, the unit of ppm used without particular mention in the present specification refers to ppm by mass, unless otherwise defined.

A boiling point used without particular mention in the present specification refers to a boiling point at 25°C under 1 atm.

A density used without particular mention in the present specification refers to a density at 25°C under 1 atm.

"Gasification" which is used without particular mention in the present specification refers to a thermal-chemical conversion process through a chemical structure change of a carbonaceous material in the presence of a gasifier (air, oxygen, steam, carbon dioxide, or a mixture thereof) in a broad sense, and refers to a process of converting the carbonaceous material mainly into syngas in a narrower sense.

As a conventional process for manufacturing syngas, a gasification process using a catalyst is carried out, but due to the formation of coke and the like in the gasification process, the catalyst is inactivated to cause process trouble in continuous operation. In addition, for securing economic feasibility, relatively expensive catalysts need to be recovered, but in order to recover catalyst discharged in the state in which coke is agglomerated, a plurality of subsequent processes (such as hot-water extraction and lime digestion) should be carried out, and thus, process efficiency is significantly deteriorated.

In addition, since the conventionally performed gasification process of organic wastes has a significantly low manufacturing yield of syngas which may be converted into a high value-added product of 30% or less and has poor productivity, commercialization using the process is limited. Further, in terms of environmental protection, it is preferred to suppress CO₂ emission, but since the gasification reaction product of organic wastes contains CO₂ in addition to H₂ and CO, carbon dioxide emission is higher than that in landfill or pyrolysis treatment, and thus, the gasification process has a serious problem of rather causing more environmental pollution.

Keeping the above in mind, the present invention relates to a method of manufacturing syngas, the method comprising: (S1) heat-treating organic waste under hydrogen in a first reactor; (S2) separating hydrogen from a product of (S1) and recovering a first mixed gas from which hydrogen has been removed; (S3) reforming the first mixed gas recovered in (S2) with water vapor under a catalyst in a second reactor; (S4) separating the catalyst and carbon dioxide from the product of (S3) and recovering a second mixed gas from which carbon dioxide has been removed; (S5) converting carbon dioxide separated in (S4) into carbon monoxide through a reverse Boudouard reaction in a third reactor; and (S6) mixing hydrogen separated in (S2), the second mixed gas recovered in (S4), and carbon monoxide converted in (S5) to produce syngas. The method including a series of processes of (S1) to (S6) may minimize carbon dioxide formation as compared with that of a conventional gasification process to prevent environmental pollution and also significantly improve a manufacturing yield of syngas from organic wastes.

In (S1), organic wastes are heat-treated under hydrogen in the first reactor, and a gasification reaction of the organic wastes may occur. Specifically, in (S1), at least one gasification reaction selected from the following Reaction Formulae 1 to 4 may be involved:

[Reaction Formula 1] C + H₂O → H₂ + CO (aqueous gasification reaction of carbon)

[Reaction Formula 2] C + CO₂ → 2CO (carbon dioxide gasification reaction of carbon)

[Reaction Formula 3] CO + 3H₂ → CH₄ + H₂O (methanation reaction)

[Reaction Formula 4] C + O₂ → CO₂ (oxidation reaction of carbon) .

In an exemplary embodiment, the product of (S1) may include methane, hydrogen, carbon monoxide, and carbon dioxide. Usually, when performing a heat treatment process of organic wastes, the product may include methane, hydrogen, carbon monoxide, and carbon dioxide, and in addition to that, various impurities such as water vapor, nitrogen oxides, sulfur oxides, and hydrogen chloride may be included. In the present invention, the organic wastes are heat-treated under hydrogen, thereby obtaining a product having a higher methane content than that of the gasification process of the organic wastes which are conventionally usually performed. As described above, in (S1), since the product having a high methane content is obtained, the efficiency of the manufacturing method of syngas including a series of processes (S1) to (S6) may be optimized and the manufacturing yield of syngas may be maximized. Herein, the first reactor may include a fluidized bed reactor or a fixed bed reactor.

In an exemplary embodiment, 20 vol% or more of methane may be included with respect to the total volume of the product of (S1). By performing a heat treatment of organic wastes under hydrogen, 20 vol% or more of methane with respect to the total volume of the product may be included, and as described later, when the heat treatment is performed under high pressure hydrogen conditions, a methane content may be further improved. Specifically, methane may be included at 40 vol% or more, more specifically 60 vol% or more with respect to the total volume of the product. Methane may be included at 99 vol% or less without limitation.

(S1) may be performed under the catalyst conditions. (S1) is performing a heat treatment of organic wastes under hydrogen, and it may be favorable that a catalyst for hydrogen activation is used as the catalyst in terms of reaction activity. For example, the catalyst may include active metal having hydrotreating catalytic ability, and preferably may be active metal supported on a support. Any active metal may be used as long as it has required catalytic ability, and for example, may include any one or more selected from molybdenum, cobalt, nickel, and the like. Any support may be used as long as it has durability to support the active metal, and for example, may include a metal including at least one selected from silicon, aluminum, sodium, titanium, and the like, and oxides of thereof; and at least one carbon-based material selected from carbon black, active carbon, graphene, carbon nanotubes, graphite, and the like. The step may be performed under non-catalytic conditions. When it is performed under non-catalytic conditions, it may be favorable to perform the step at a higher temperature for improving reaction activity.

(S2) is recovering a first mixed gas, in which hydrogen is separated from the product of (S1) and the first mixed gas from which hydrogen has been removed may be recovered. The efficiency of steam reforming reaction may be improved by separating hydrogen. A method for separating hydrogen may use a conventionally known method, and for example, hydrogen may be separated using a pressure swing adsorption device.

In an exemplary embodiment, the first mixed gas of (S2) includes methane, carbon monoxide, and carbon dioxide, and the product of (S3) may include carbon monoxide, hydrogen, and carbon dioxide. (S3) is a step of reforming the first mixed gas recovered in (S2) with water vapor (steam reforming reaction) in the presence of a catalyst in the second reactor, and specifically, a reaction like Reaction Formula 5 may be involved:

[Reaction Formula 5] CH₄ + H₂O → CO + 3H₂ (steam modification reaction of methane).

Since methane included in the first mixed gas is converted into hydrogen and carbon monoxide, the contents of hydrogen and carbon monoxide which is the main components of syngas may be significantly improved. In addition, since hydrogen is pre-separated in (S2), and (S3) is performed on the first mixed gas from which hydrogen has been removed, the activity of the steam reforming reaction of methane may be increased and a manufacturing yield of syngas may be maximized. (S3) may be performed at a temperature of 500 to 900°C and a pressure of 100 to 300 kPa under water vapor conditions. Within the range, the efficiency of the reforming reaction may be excellent. Specifically, the temperature may be 550 to 850°C and the pressure may be 100 to 250 kPa, and more specifically, the temperature may be 600 to 850°C and the pressure may be 150 to 250 kPa. It is preferred that (S3) is performed under a catalyst for improving reaction efficiency. The detailed description for the catalyst will be provided later, and the second reactor may include a fluidized bed reactor. In terms of the efficiency of the steam reforming reaction and a catalyst regeneration process described later, it is preferred to use a fluidized bed reactor, in which the fluidized bed reactor may be a riser.

That is, when performing the heat treatment process of organic wastes in (S1), a product having a high methane content is obtained and (S2) and (S3) are performed on the product, thereby solving the conventional problem of a significantly low manufacturing yield of syngas. In addition, as described later, by a series of processes of manufacturing syngas including (S1) to (S6), carbon dioxide emission may be minimized to prevent environmental pollution and simultaneously maximize the manufacturing yield of syngas.

(S4) is a step of recovering the second mixed gas, in which the catalyst and carbon dioxide are separated from the product of (S3) and the second mixed gas from which carbon dioxide has been removed may be recovered. In the separation of the catalyst and carbon dioxide (CO₂), it is preferred to separate the catalyst first and then separate carbon dioxide (CO₂), and the catalyst and carbon dioxide (CO₂) may be separated at the same time. Referring to FIG. 3, as described later, it is preferred that a cyclone is provided between the second reactor and a carbon dioxide separation unit to separate the catalyst from the product of the second reactor (first mixed gas), and then the product from which the catalyst has been separated is introduced to the carbon dioxide separation unit to separate carbon dioxide and recover the second mixed gas.

(S5) is a step of converting carbon dioxide separated in (S4) into carbon monoxide through a reverse Boudouard reaction in the third reactor, in which carbon dioxide produced by the heat treatment process of (S1) is not emitted to the outside, but converted into carbon monoxide, thereby preventing environmental pollution and simultaneously improving a manufacturing yield of syngas. The reverse Boudouard reaction may involve the reaction of the following Reaction Formula 6. In order to perform the reverse Boudouard reaction well, carbon such as activated carbon may be supplied, or as described later, in (S1), a catalyst inactivated by coke and the like is used to perform the reverse Boudouard reaction.

[Reaction Formula 6] C + CO₂ → 2CO (reverse Boudouard reaction)

Carbon monoxide which has been converted by the reverse Boudouard reaction of (S5) may be used in the production of syngas in (S6) described later. When unreacted carbon dioxide is present in the product of (S5), carbon dioxide is separated again from the product, and the reverse Boudouard reaction of (S5) may be repeated once or more on the separated carbon dioxide. Accordingly, carbon dioxide may be converted into carbon monoxide in a very high yield.

(S6) is a step of producing syngas, in which the hydrogen separated in (S2), the second mixed gas recovered in (S4), and carbon monoxide converted in (S5) may be mixed to produce syngas. As described above, syngas refers to a mixed gas including hydrogen and carbon dioxide as main components, and the syngas may be used as a raw material of a Fischer-Tropsch reaction to manufacture high value-added products. Herein, it is preferred that a stoichiometrically required molar ratio of H₂:CO is 2:1.

A yield of syngas in the method of the invention, including a series of steps of (S1) to (S6), may be maximized, and carbon dioxide emission may be minimized to prevent environmental pollution.

In an exemplary embodiment, (S5) may further include (S5-1) introducing the catalyst separated in (S4) to the third reactor and regenerating the catalyst through a reverse Boudouard reaction; and (S5-2) recirculating and resupplying the regenerated catalyst to (S3). In a conventional gasification process, the catalyst is inactivated by occurrence of by-products such as coke, so that process trouble occurs by the inactivated catalyst during continuous operation. In order to solve the problem, a certain amount of a new catalyst is continuously exchanged with a waste catalyst to maintain a catalytic activity at a certain level or higher, but process efficiency is significantly deteriorated in the exchange process. In the present invention, carbon dioxide is converted into carbon monoxide in the reverse Boudouard reaction, a waste catalyst in which coke and the like are agglomerated is simultaneously treated together to regenerate the catalyst, and the catalyst is recirculated and resupplied to the second reactor of (S3), thereby significantly improving process efficiency. When the catalyst circulation process as such is included, the third reactor may include a fluidized bed reactor, and for example, a regenerator in the fluidized bed reactor.

In an exemplary embodiment, in (S3), the catalyst may be a composite catalyst in which a metal hydride is supported on zeolite. The metal hydride may include at least one selected from nickel, vanadium, iron, platinum, palladium, or ruthenium. As the metal hydride, commonly known metals such as nickel, vanadium, or iron may be used, and when the raw material such as an organic waste has a low impurity content in the heat treatment process, a precious metal may be used. The precious metal may be platinum, palladium, or ruthenium.

The zeolite may include ZSM-5, ZSM-11, USY zeolite, ferrierite, mordenite, MCM-22, SUZ-4, or L-type zeolite. The zeolite may be any zeolite having durability to support active metal, and specifically, may be ZSM-5 or USY zeolite in terms of improving heat treatment efficiency and gasification efficiency.

Separation of carbon dioxide in (S4) may be performed using various carbon dioxide separation units. In an exemplary embodiment, it may be performed using an amine scrubber. Usually, the amine scrubber binds to and removes carbon dioxide by an amine-based material, and it may separate components such as carbon dioxide and hydrogen sulfide from gas steam and recover steam containing hydrogen, carbon monoxide or inert gas. Specifically, the product is added from the second reactor to an amine solution at a temperature of 40 to 100°C with a first amine scrubber to capture carbon dioxide, and is heated to 100 to 200°C in a second amine scrubber to separate amine and carbon dioxide. When the amine scrubber is used, carbon dioxide may be separated at a lower temperature as compared with a CCS unit described later, and thus, it may be favorable in terms of process stability.

As another exemplary embodiment, separation of carbon dioxide may be performed using a carbon capture and storage (CCS) unit. The CCS unit may adsorb and separate carbon dioxide using an adsorbent including at least one selected from calcium oxide, calcium hydroxide, dolomite, limestone, or trona. Specifically, the adsorbent may be calcium oxide. The adsorption of carbon dioxide (CO₂) in the CCS unit may be performed at a temperature of 500°C or higher and lower than 800°C and a pressure of 30 to 500 kPa. Under the conditions, carbon dioxide adsorption efficiency may be excellent. Specifically, the temperature may be 500 to 700°C and the pressure may be 50 to 150 kPa, and more specifically, the temperature may be 550 to 650°C and the pressure may be 50 to 100 kPa. Carbon dioxide adsorbed by the adsorbent in the CCS unit is desorbed again and the desorption may be performed at a temperature of higher than 500°C and 1000°C or lower and a pressure of 30 to 500 kPa. Under the conditions, carbon dioxide desorption efficiency may be excellent. Specifically, the temperature may be 700 to 950°C and the pressure may be 50 to 150 kPa, and more specifically, the temperature may be 850 to 950°C and the pressure may be 50 to 100 kPa.

In an exemplary embodiment, (S1) may be performed at a temperature of 500 to 900°C and a pressure of 300 to 600 kPa. Under the conditions, heat treatment efficiency may be excellent, and in particular, the heat treatment is performed under high pressure hydrogen conditions of 300 to 500 kPa, thereby improving a methane content in the product. Specifically, the temperature may be 600 to 850°C and the pressure may be 350 to 500 kPa, and more specifically, the temperature may be 700 to 850°C and the pressure may be 400 to 500 kPa.

In an exemplary embodiment, (S2) may be performed at a temperature of 5 to 50°C and a pressure of 800 to 1200 kPa. Under the conditions, the catalyst and hydrogen may be effectively separated from the product of (S1), specifically, the temperature may be 10 to 50°C and the pressure may be 1000 to 1100 kPa, and more specifically, the temperature may be 20 to 50°C and the pressure may be 1000 to 1050 kPa.

In an exemplary embodiment, the reverse Boudouard reaction of (S5) may be performed at a temperature of 800 to 1000°C and a pressure of 30 to 500 kPa. Under the conditions, the conversion efficiency from carbon dioxide into carbon monoxide and the catalyst regeneration efficiency may be excellent. Specifically, the temperature may be 800 to 950°C and the pressure may be 50 to 150 kPa, and more specifically, the temperature may be 800 to 900°C and the pressure may be 50 to 100 kPa.

In an exemplary embodiment, the syngas produced in (S6) may include hydrogen (H₂) and carbon monoxide (CO) and a molar ratio between hydrogen (H₂) and carbon monoxide (CO) may satisfy 1.8 to 2.2. As described above, the syngas is used as a raw material of the Fischer-Tropsch reaction and converted into high value-added products such as light oil, heavy oil, diesel oil, jet oil, and lube oil, and when a stoichiometrically required molar ratio of H₂:CO satisfies 1.8 to 2.2, conversion efficiency may be excellent. Preferably, the molar ratio of H₂:CO may be 1.9 to 2.1, more preferably 1.95 to 2.05.

In an exemplary embodiment, the molar ratio between the hydrogen and the carbon monoxide may be adjusted by controlling the reverse Boudouard reaction depending on a flow rate of the hydrogen separated in (S2), the carbon monoxide produced in (S3), or the carbon monoxide converted in (S5). A flow rate of the hydrogen separated in (S2), the carbon monoxide produced in (S3), or the carbon monoxied converted in (S5) is measured in real time and the reverse Boudouard reaction is controlled so that the molar ratio of H₂:CO is satisfied. Besides, flow rates of H₂ and CO in the mixed gas recovered in (S2) are also measured and the reaction conditions and the reaction speed of the reverse Boudouard reaction are adjusted to satisfy the molar ratio of H₂:CO.

In an exemplary embodiment, the molar ratio between the hydrogen and the carbon monoxide may be adjusted by supplying separate carbon dioxide to (S5) depending on the flow rate of the hydrogen separated in (S2) or the carbon monoxide converted in (S3). When CO is significantly small in the molar ratio of H₂:CO, carbon dioxide is separately supplied to (S5), thereby improving the reverse Boudouard reaction activity to satisfy the molar ratio of H₂:CO. The supply of carbon dioxide may be performed by a separate carbon dioxide storage unit. Besides, when a H₂ content is low as compared with CO and it is difficult to adjust the molar ratio of H₂:CO to 2, a water gas shift (WGS) reaction may be further performed.

In an exemplary embodiment, the organic waste in (S1) may comprise at least one selected from waste plastic, solid wastes, biomass, waste oil, or waste tires. Any carbon-containing material such as biomass and coal may be used without limitation as the raw material of a gasification reaction, but considering the problem to be solved by the present invention, it may be appropriate to use the organic wastes.

In an exemplary embodiment, before (S2), purifying the mixed gas produced in (S1) may be further included. The mixed gas produced in (S1) may further include other components such as impurity gas such as water vapor, H₂S, HCl, HOCl, and NH₃, and fine dust, in addition to hydrogen (H₂), carbon monoxide (CO), and carbon dioxide (CO₂). By removing other components such as water vapor through the step of purifying the mixed gas, a manufacturing yield of syngas may be further improved. Besides, before (S2), when H₂ is relatively insufficiently produced in the gasification process depending on the kind of organic wastes, a water gas shift (WGS) reaction is performed to replenish H₂, thereby improving the manufacturing yield of syngas. The WGS reaction may be performed in the conditions of 20 to 70 bar and 100 to 250°C under a catalyst. The catalyst may be used without limitation as long as it is a catalyst having WGS reaction activity, and preferably, may be a Cu-Zn mixed catalyst. Herein, since carbon dioxide produced by the water gas shift reaction is converted into carbon monoxide by the reverse Boudouard reaction, the environmental pollution problem caused by performing the conventional water gas shift reaction may be solved and simultaneously the effect of improving a manufacturing yield of syngas may be promoted.

In addition, the present invention provides an apparatus for manufacturing syngas, the apparatus comprising: a first reactor configured to receive a feed comprising organic waste and allow for a gasification reaction under hydrogen to be performed; a hydrogen separation unit configured to receive a product from the first reactor, to separate hydrogen , and to recover a first mixed gas from which hydrogen has been removed; a second reactor configured to receive first mixed gas from which hydrogen has been removed from the hydrogen separation unitand to allow for a reforming reaction with water vapor under a catalyst to be performed; a carbon dioxide separation unit configured to receive a product from the second reactor, to separate carbon dioxide, and to recover a second mixed gas from which carbon dioxide has been removed; a third reactor configured to receive carbon dioxide separated in the carbon dioxide separation unit and to allow for a reverse Boudouard reaction to be performed; and a syngas production unit configured to receive and mix hydrogen separated from the hydrogen separation unit, second mixed gas from which carbon dioxide has been removed in the carbon dioxide separation unit, and carbon monoxide recovered from the third reactor, and to allow for a production of syngas. The syngas may be manufactured in a high yield from the organic wastes by the apparatus, and carbon dioxide emission is minimized to prevent environmental pollution.

In an exemplary embodiment, the first reactor may include a fluidized bed reactor or a fixed bed reactor. The first reactor performs gasification by heat-treating organic wastes, and may use the fluidized bed reactor or the fixed bed reactor without limitation. As described later, considering the use of the fluidized bed reactor as the second reactor and the third reactor, it is preferred to use the fluidized bed reactor in terms of process efficiency. The fluidized bed reactor may cause a gasification reaction by fluidizing and mixing in a state in which a solid layer (layer material) is suspended by reaction gas having an upward flow.

In an exemplary embodiment, the second reactor may include a fluidized bed reactor.

In an exemplary embodiment, the third reactor may include a fluidized bed reactor.

It is preferred to use the fluidized bed reactor as the second reactor and the third reactor in terms of a catalyst regeneration process. Herein, the second reactor may be a riser in the fluidized bed reactor, and the third reactor may be a regenerator in the fluidized bed reactor.

In an exemplary embodiment, the hydrogen separation unit may include a pressure swing adsorption (PSA) device.

As shown in FIG. 1, an organic waste 1 is introduced into a first reactor and heat-treated under hydrogen to perform a gasification reaction. The product produced in the first reactor 100 may include methane, hydrogen, carbon monoxide, and carbon dioxide. The product is introduced from the first reactor 100 to the hydrogen separation unit to separate hydrogen and recover the first mixed gas from which hydrogen has been removed. The first mixed gas from which hydrogen has been removed is introduced to the second reactor and a water vapor reforming reaction may be performed under a catalyst. The product of the second reactor may be introduced to the carbon dioxide separation unit to separate carbon dioxide and recover the second mixed gas from which carbon dioxide has been removed. The separated carbon dioxide may be introduced from the carbon dioxide separation unit and converted into carbon monoxide by the reverse Boudouard reaction. Hydrogen separated from the hydrogen separation unit, the second mixed gas recovered from the carbon dioxide separation unit, and carbon monoxide converted in the third reactor may be mixed in the syngas production unit to produce syngas. Herein, when unreacted carbon dioxide remains in the product of the third reactor, the product may be introduced again to the carbon dioxide separation unit to separate carbon dioxide from the product, and the separated carbon dioxide may be introduced again to the third reactor to perform the reverse Boudouard reaction again. The process may be repeated once or more, thereby converting unreacted carbon dioxide into carbon monoxide to increase a carbon monoxide conversion rate.

In an exemplary embodiment, a purification unit 700 may be further included between the first reactor and the hydrogen separation unit, as shown in FIG. 2. In the purification unit 700, the purification may be performed by a dust collection filter for high temperature/high pressure or a wet scrubber, and aqueous impurity gas components such as H₂S, HCl, HOCl, and NH₃ are removed to further improve the manufacturing yield of syngas.

In an exemplary embodiment, the manufacturing apparatus of syngas may further include a cyclone configured to separate a catalyst from the product of the second reactor; a supply line configured to supply catalyst separated from the cyclone to the third reactor; and a recirculation line configured to resupply regenerated catalyst from the third reactor to the second reactor, as shown in FIG. 3. The catalyst separated from the cyclone is introduced to the third reactor, in which the catalyst may include a coke component produced in apyrolysis process of organic wastes. Carbon dioxide may be introduced from the carbon dioxide separation unit to the third reactor. Besides, a separate carbon dioxide storage unit may be provided to introduce separate carbon dioxide. The catalyst is treated with carbon dioxide at a high temperature of 800°C or higher, thereby removing impurities such as coke included in the catalyst. The catalyst may be reintroduced to the second reactor through the recirculation line.

For the matters which are not described in the manufacturing apparatus of syngas, the above description of the manufacturing method of syngas may be referred.

In addition, the present invention provides a method for manufacturing a liquid hydrocarbon including: manufacturing syngas by a method of the invention; supplying the syngas to a fourth reactor; and performing a Fischer-Tropsch synthesis reaction in the fourth reactor. The syngas produced through (S1) to (S6) is used as the raw material of the Fischer-Tropsch synthesis reaction represented by the following Reaction Formula 7, thereby manufacturing a liquid hydrocarbon:

[Reaction Formula 7] nCO + 2nH₂ → CnH₂ₙ + nH₂O.

FIG. 4 illustrates a block diagram of the manufacturing method of a liquid hydrocarbon. The fourth reactor may be a Fischer-Tropsch synthesis reactor, in which the reactor may include a liquid product separation and heavy end recovery unit. In order to improve a manufacturing yield of the liquid hydrocarbon, it is preferred that a stoichiometrical molar ratio of H₂:CO satisfies 1.8 to 2.2. Preferably, the molar ratio of H₂:CO may be 1.9 to 2.1, more preferably 1.95 to 2.05. The liquid hydrocarbon may include naphtha having a boiling point of 150°C or lower, kerosene having a boiling point of 150 to 265°C, LGO having a boiling point of 265 to 340°C, and VGO having a boiling point of 340°C or higher. The syngas produced in the conventional gasification process of organic wastes has a low amount of syngas (H₂, CO) which may be converted into a product (liquid hydrocarbon) and a lower molar mass of H₂ compared to CO in H₂:CO, and thus, a recovery rate of the expected product is significantly deteriorated. The syngas produced by the steps of (S1) to (S6) of the present invention is used as the raw material of the Fischer-Tropsch synthesis reaction, thereby improving the recovery rate of the liquid hydrocarbon product as compared with the conventional gasification process of organic wastes. In order to obtain high-quality liquid hydrocarbon, it is preferred that a purification unit is provided in the front of the Fischer-Tropsch synthesis reactor and the purification process is performed.

Hereinafter, embodiments of the present invention will be described in detail by the examples.

### Example 1

A manufacturing apparatus of syngas including a first reactor (fluidized bed reactor), a purification unit (wet scrubber), a hydrogen separation unit (pressure swing adsorption device, PSA), a second reactor (fluidized bed reactor), a carbon dioxide separation unit, a third reactor (fluidized bed reactor), and a syngas production unit was operated for 120 minutes to manufacture syngas.

Specifically, 100 g of municipal solid wastes (MSW) was added to the first reactor, and heat-treated at a temperature of 750°C and a pressure of 300 kPa under a CoMo/r-Al₂O₃ catalyst and a hydrogen gas.

The product was added from the fluidized bed reactor to the purification unit (wet scrubber), treated at 70°C and 100 kPa to remove impurities, and then introduced to the hydrogen separation unit to separate hydrogen under 25°C and 1013 kPa, and a first mixed gas from which hydrogen had been removed was recovered.

The first mixed gas from which hydrogen had been separated in the hydrogen separation unit was introduced to a second reactor equipped with a Ni/USY zeolite catalyst and treated at 750°C and 250 kPa under water vapor to perform a stream reforming reaction.

The catalyst was separated from the product of the second reactor using a cyclone, and CO₂ was recovered from the product from which the catalyst had been separated using an amine scrubber. A reactant gas was added to an amine solution at 50°C in a first amine scrubber to capture CO₂, the temperature was raised to 100°C or higher in a second amine scrubber to separate amine and CO₂, and amine was recovered.

The separated carbon dioxide was added to the third reactor and a reverse Boudouard reaction was performed to convert carbon dioxide into carbon monoxide.

Hydrogen separated from the hydrogen separation unit, the second mixed gas recovered from the carbon dioxide separation unit, and carbon monoxide converted in the third reactor were all introduced to a synthesis unit and mixed at 200°C to manufacture syngas.

In this process, while the flow rate of hydrogen separated from the hydrogen separation unit and the flow rate of carbon monoxide converted in the second reactor were measured in real time, in order to adjust the molar ratio of H₂:CO in the synthesis gas to 2, the reaction activity and/or the reactant composition activity of the hydrogen separation reaction, steam reforming reaction, and inverse Buddha reaction were adjusted. At this time, the reaction activity of the reverse Buda reaction can be performed through a reverse Buda reaction control device.

In addition, the separated catalyst was supplied to the third reactor through a separate supply line, treated with the reverse Boudouard reaction, regenerated, and then resupplied to the second reactor through a recirculation line connected to the second reactor.

### Example 2

Syngas was manufactured in the same manner as in Example 1, except that the reaction was performed at the temperature of the first reactor of 850°C and the pressure of 450 kPa.

### Example 3

Syngas was manufactured in the same manner as in Example 1, except that the flow rate of hydrogen and carbon monoxide were not measured in real time.

### Example 4

Syngas was manufactured in the same manner as in Example 1, except that the process of regenerating the catalyst separated from the third reactor was not performed.

### Comparative Example 1

Syngas was manufactured in the same manner as in Example 1, except that the hydrogen separation step was not performed by using the manufacturing apparatus of syngas including no hydrogen separation unit.

### Comparative Example 2

Syngas was manufactured in the same manner as in Example 1, except that the steam reforming reaction was not performed by using the manufacturing apparatus of syngas including no second reactor.

### Comparative Example 3

Syngas was manufactured in the same manner as in Example 1, except that the reverse Boudouard reaction was not performed by using the manufacturing apparatus of syngas including no third reactor.

### Comparative Example 4

Syngas was manufactured in the same manner as in Example 1, except that the heat treatment was performed at a temperature of 800°C and a pressure of 350 kPa under the gas conditions of the first reactor of water vapor, not hydrogen.

### Evaluation Example

The composition of the syngas manufactured by operating the manufacturing apparatus of syngas for 120 minutes was analyzed by gas chromatograph and a total amount of gas was confirmed by a gas meter. Specifically, the syngas was quantified by GC to calculate selectivity for each gas, and the composition of each gas was analyzed by the total amount of gas confirmed from a flowmeter, thereby evaluating the gas manufacturing yield and a carbon dioxide reduction effect.

The evaluation results are shown in the following Table 1:

**[Table 1] 1 lbmol/h = 0.454 kg-mol/hr**

| | | | | | | | | | |
|---|---|---|---|---|---|---|---|---|---|
| CO₂ | Molar rate (lbmol/hr) | 0 | 0 | 0 | 0 | 0 | 0 | 637 | 0 |
| | Composition (vol%) | 0 | 0 | 0 | 0 | 0 | 0 | 21 | 0 |
| Others | Molar rate (lbmol/hr) | 42 | 38 | 55 | 121 | 112 | 82 | 88 | 103 |
| | Composition (vol%) | 1 | 1 | 2 | 4 | 4 | 5 | 3 | 4 |

Referring to the results of analyzing the syngas composition of Table 1, it was confirmed that in the manufacturing process of syngas, Examples 1 to 4 had much better production amounts of H₂ and CO, and had minimized production of CO₂ to have a favorable effect in terms of a syngas manufacturing yield and environmental pollution prevention, as compared with Comparative Examples 1 to 4.

Specifically, it was confirmed in Example 2 that as the temperature conditions were changed, H₂ and CO production amounts were best with H₂ being 1193 kg-mol/hr (2630 lbmol/hr) and CO being 1315 lbmol/hr, 596 kg-mol/hr (1315 lbmol/hr) and the molar ratio of H₂:CO satisfied 2:1.

It was confirmed in Example 3 that since the reaction was performed without measuring the flow rate of carbon monoxide converted in the second reactor in real time, the molar ratio of H₂:CO did not satisfy 2:1 and the production amounts of H₂ and CO were somewhat lower than those of Example 1 with H₂ being 1036 kg-mol/hr (2285 lbmol/ hr) and CO being 512 kg-mol/hr (1128 lbmol/hr), but were higher than those of Comparative Examples 1 to 4.

Since in Example 4, the reaction was performed without performing the regeneration process of the separated catalyst and without recirculation of the catalyst, it was confirmed that the production amount of H₂ and CO were somewhat lower than those of Example 1 with H₂ being 885 kg-mol/hr (1952 lbmol/hr) and CO being 446 kg-mol/hr (983 lbmol/hr) as compared with those of Example 1, but were higher than those of Comparative Examples 1 to 4.

Since in Comparative Example 1, the hydrogen separation step was not performed by using the manufacturing apparatus of syngas including no hydrogen separation unit, it was confirmed that the production amounts of H₂ and CO were much lower than those of Example 1 with H₂ being 768 kg-mol/hr (1694 lbmol/hr) and CO being 386 kg-mol/hr (852 lbmol/hr).

Since in Comparative Example 2, the steam reforming reaction was not performed by using the manufacturing apparatus of syngas including no second reactor, it was confirmed that the production amounts of H₂ and CO were much lower than those of Example 1 with H₂ being 429 kg-mol/hr (946 lbmol/hr) and CO being 219 kg-mol/hr (483 1bmol/hr).

Since in Comparative Example 3, the reaction was performed without performing the reverse Boudouard reaction by using the manufacturing apparatus of syngas including no third reactor, it was confirmed that considering that the CO production amount was much lower and the CO₂ production amount was much higher than those of Example 1 with H2 being 823 kg-mol/hr (1816 lbmol/hr), CO being 249 kg-mol/hr (549 lbmol/hr) and CO₂ being 289 kg-mol/hr (637 lbmol/hr), and thus, it is not preferred in terms of a manufacturing yield of syngas and environmental pollution.

Since in Comparative Example 4, the heat treatment was performed under the gas conditions of the first reactor which were not hydrogen conditions but water vapor conditions to perform the gasification process, the production amounts of H₂ and CO were significantly lower than those of Example 1 with H₂ being 757 kg-mol/hr (1670 lbmol/hr), CO being 375 kg-mol/hr (lbmol/hr), and CO₂ being 0 kg-mol/hr (0 lbmol/hr), as compared with those of Example 1.

The manufacturing method and the manufacturing device of syngas according to the present invention have a significantly improved manufacturing yield of syngas from organic wastes.

The manufacturing method and the manufacturing device of syngas according to the present invention minimize carbon dioxide formation in a syngas manufacturing process.

The manufacturing method and the manufacturing apparatus of syngas according to the present invention also induce an effect of regenerating a waste catalyst in a process of converting carbon dioxide into carbon monoxide to improve process efficiency.

## Claims

1. A method of manufacturing a syngas, the method comprising:
(S1) heat-treating organic waste under hydrogen in a first reactor;
(S2) separating hydrogen from a product of (S1) and recovering a first mixed gas from which hydrogen has been removed;
(S3) reforming the first mixed gas recovered in (S2) with water vapor under a catalyst in a second reactor;
(S4) separating the catalyst and carbon dioxide from a product of (S3) and recovering a second mixed gas from which carbon dioxide has been removed;
(S5) converting carbon dioxide separated in (S4) into carbon monoxide through a reverse Boudouard reaction in a third reactor; and
(S6) mixing hydrogen separated in (S2), the second mixed gas recovered in (S4), and carbon monoxide converted in (S5) to produce syngas.

2. The method of claim 1, wherein the product of (S1) includes methane, hydrogen, carbon monoxide, and carbon dioxide, wherein preferably 20 vol% or more of methane is included with respect to the total volume of the product of (S1) .

3. The method of any preceding claim, wherein the first mixed gas of (S2) includes methane, carbon monoxide, and carbon dioxide, and the product of (S3) includes hydrogen, carbon monoxide, and carbon dioxide.

4. The method of any preceding claim, wherein the catalyst in (S3) is a composite catalyst in which a metal hydride is supported on zeolite, wherein the metal hydride preferably includes at least one selected from nickel, vanadium, iron, platinum, palladium, or ruthenium, and wherein the zeolite preferably includes ZSM-5, ZSM-11, USY zeolite, ferrierite, mordenite, MCM-22, SUZ-4, or L-type zeolite.

5. The method of any preceding claim, wherein (S5) further includes:
(S5-1) introducing the catalyst separated in (S4) to the third reactor and regenerating the catalyst through a reverse Boudouard reaction; and
(S5-2) recirculating and resupplying the regenerated catalyst to (S3).

6. The method of any preceding claim, wherein (S1) is performed at a temperature of 500 to 900°C and a pressure of 300 to 500 kPa.

7. The method of any preceding claim, wherein (S2) is performed at a temperature of 5 to 50°C and a pressure of 800 to 1200 kPa.

8. The method of any preceding claim, wherein the reverse Boudouard reaction of (S5) is performed at a temperature of 800 to 1000°C and a pressure of 300 to 500 kPa.

9. The method of any preceding claim, wherein the organic waste in (S1) comprises at least one selected from waste plastic, solid waste, biomass, waste oil, or waste tires.

10. The method of any preceding claim, further comprising: before (S2), purifying the mixed gas produced in (S1).

11. An apparatus for manufacturing syngas by a method of any preceding claim, the apparatus comprising:
a first reactor (100) configured to receive a feed (1) comprising organic waste and allow for a gasification reaction under hydrogen to be performed;
a hydrogen separation unit (200) configured to receive a product from the first reactor (100), to separate hydrogen, and to recover a first mixed gas from which hydrogen has been removed;
optionally, a purification unit (700) between the first reactor (100) and the hydrogen separation unit (200);
a second reactor (300) configured to receive first mixed gas which hydrogen is removed from the hydrogen separation unitand allow for a water vapor reforming reaction under a catalyst to be performed;a carbon dioxide separation unit (400) configured to receive a product from the second reactor (300), to separate carbon dioxide, and to recover a second mixed gas from which carbon dioxide has been removed;
a third reactor (500) configured to receive carbon dioxide separated in the carbon dioxide separation unit (400) and to allow for a reverse Boudouard reaction to be performed; and
a syngas production unit (600) configured to receive and mix hydrogen separated in the hydrogen separation unit (200), second mixed gas recovered from the carbon dioxide separation unit (400), and carbon monoxide recovered from the third reactor (500), and to allow for a production of syngas.

12. The apparatus of claim 11, wherein the first reactor (100) includes a fluidized bed reactor or a fixed bed reactor; and/or wherein the second reactor (300) includes a fluidized bed reactor; and/or wherein the third reactor (500) includes a fluidized bed reactor.

13. The apparatus of claim 11 or 12, wherein the hydrogen separation unit (200) includes a pressure swing adsorption (PSA) device.

14. The apparatus of any one of claims 11 to 13, further comprising:
a cyclone (800) configured to separate catalyst from a product of the second reactor (300);
a supply line configured to supply separated catalyst from the cyclone (800) to the third reactor (500); and
a recirculation line configured to resupply regenerated catalyst from the third reactor (500) to the second reactor (300).

15. A method of manufacturing a liquid hydrocarbon, the method comprising:
manufacturing syngas by a method of any one of claims 1 to 10;
supplying the syngas to a fourth reactor (900), preferably including a fixed bed reactor; and
performing a Fischer-Tropsch synthesis reaction in the fourth reactor (900).

## Patentansprüche

1. Verfahren zur Herstellung eines Synthesegases, wobei das Verfahren umfasst:
(S1) Wärmebehandeln von organischem Abfall unter Wasserstoff in einem ersten Reaktor;
(S2) Abscheiden von Wasserstoff von einem Produkt von (S1) und Rückgewinnen eines ersten Mischgases, aus dem Wasserstoff entfernt worden ist;
(S3) Reformieren des ersten Mischgases, das in (S2) rückgewonnen wurde, mit Wasserdampf unter einem Katalysator in einem zweiten Reaktor;
(S4) Abscheiden des Katalysators und des Kohlendioxids von einem Produkt von (S3) und Rückgewinnen eines zweiten Mischgases, aus dem das Kohlendioxid entfernt wurde;
(S5) Umwandeln des in (S4) abgeschiedenen Kohlendioxids in Kohlenmonoxid durch eine umgekehrte Boudouard-Reaktion in einem dritten Reaktor; und
(S6) Mischen von in (S2) abgeschiedenem Wasserstoff, dem in (S4) rückgewonnenen zweiten Mischgas und in (S5) umgewandeltem Kohlenmonoxid, um Synthesegas herzustellen.

2. Verfahren nach Anspruch 1, wobei das Produkt von (S1) Methan, Wasserstoff, Kohlenmonoxid und Kohlendioxid aufweist, wobei bevorzugt 20 Vol.-% oder mehr Methan, bezogen auf das Gesamtvolumen des Produkts von (S1), enthalten sind.

3. Verfahren nach einem der vorstehenden Ansprüche, wobei das erste Mischgas aus (S2) Methan, Kohlenmonoxid und Kohlendioxid aufweist und das Produkt aus (S3) Wasserstoff, Kohlenmonoxid und Kohlendioxid aufweist.

4. Verfahren nach einem der vorstehenden Ansprüche, wobei der Katalysator in (S3) ein Verbundkatalysator ist, bei dem ein Metallhydrid auf einem Zeolith als Träger vorliegt, wobei das Metallhydrid bevorzugt mindestens eines der Elemente Nickel, Vanadium, Eisen, Platin, Palladium oder Ruthenium ausgewähltes Metallhydrid umfasst und wobei der Zeolith bevorzugt ZSM-5, ZSM-11, USY-Zeolith, Ferrierit, Mordenit, MCM-22, SUZ-4 oder Zeolith vom L-Typ aufweist.

5. Verfahren nach einem der vorstehenden Ansprüche, wobei (S5) ferner umfasst:
(S5-1) Einleiten des in (S4) abgeschiedenen Katalysators in den dritten Reaktor und Regenerieren des Katalysators durch eine umgekehrte Boudouard-Reaktion; und
(S5-2) Rezirkulieren und erneutes Zuführen des regenerierten Katalysators zu (S3).

6. Verfahren nach einem der vorstehenden Ansprüche, wobei (S1) bei einer Temperatur von 500 bis 900 °C und einem Druck von 300 bis 500 kPa durchgeführt wird.

7. Verfahren nach einem der vorstehenden Ansprüche, wobei (S2) bei einer Temperatur von 5 bis 50 °C und einem Druck von 800 bis 1200 kPa durchgeführt wird.

8. Verfahren nach einem der vorstehenden Ansprüche, wobei die umgekehrte Boudouard-Reaktion von (S5) bei einer Temperatur von 800 bis 1000 °C und einem Druck von 300 bis 500 kPa durchgeführt wird.

9. Verfahren nach einem der vorstehenden Ansprüche, wobei der organische Abfall in (S1) mindestens einen Abfall aufweist, der aus Kunststoffabfall, Feststoffabfall, Biomasse, Altöl oder Altreifen ausgewählt ist.

10. Verfahren nach einem der vorstehenden Ansprüche, das ferner umfasst: vor (S2) das in (S1) erzeugte Mischgas zu reinigen.

11. Vorrichtung zum Herstellen von Synthesegas durch ein Verfahren nach einem der vorstehenden Ansprüche, wobei die Vorrichtung aufweist:
einen ersten Reaktor (100), der so konfiguriert ist, dass er eine Beschickung (1) aufnimmt, die organischen Abfall aufweist, und eine Vergasungsreaktion unter Wasserstoff durchführen kann;
eine Wasserstoff-Abscheideeinheit (200), die so konfiguriert ist, dass sie ein Produkt aus dem ersten Reaktor (100) aufnimmt, Wasserstoff abscheidet und ein erstes Mischgas rückgewinnt, aus dem Wasserstoff entfernt wurde;
optional eine Reinigungseinheit (700) zwischen dem ersten Reaktor (100) und der Wasserstoff-Abscheideeinheit (200); einen zweiten Reaktor (300), der so konfiguriert ist, dass er erstes Mischgas, aus dem Wasserstoff entfernt wurde, aus Wasserstoff-Abscheideeinheit aufnimmt und eine Wasserdampfreformierungsreaktion unter einem Katalysator durchführen kann;
eine Kohlendioxid-Abscheideeinheit (400), die so konfiguriert ist, dass sie ein Produkt aus dem zweiten Reaktor (300) aufnimmt, Kohlendioxid abscheidet und ein zweites Mischgas, aus dem Kohlendioxid entfernt wurde, rückgewinnt;
einen dritten Reaktor (500), der so konfiguriert ist, dass er das in der Kohlendioxid-Abscheideeinheit (400) abgeschiedene Kohlendioxid aufnimmt und die Durchführung einer umgekehrten Boudouard-Reaktion ermöglicht; und
eine Synthesegas-Herstellungseinheit (600), die so konfiguriert ist, dass sie den in der Wasserstoff-Abscheideeinheit (200) abgeschiedenen Wasserstoff, das zweite Mischgas, das aus der Kohlendioxid-Abscheideeinheit (400) gewonnen wird, und das Kohlenmonoxid, das aus dem dritten Reaktor (500) gewonnen wird, aufnimmt und mischt und die Herstellung von Synthesegas ermöglicht.

12. Vorrichtung nach Anspruch 11, wobei der erste Reaktor (100) einen Wirbelschichtreaktor oder einen Festbettreaktor aufweist; und/oder wobei der zweite Reaktor (300) einen Wirbelschichtreaktor aufweist; und/oder wobei der dritte Reaktor (500) einen Wirbelschichtreaktor aufweist.

13. Vorrichtung nach Anspruch 11 oder 12, wobei die Wasserstoff-Abscheideeinheit (200) eine Druckwechseladsorptionsvorrichtung (PSA) aufweist.

14. Vorrichtung nach einem der Ansprüche 11 bis 13, ferner aufweisend:
einen Zyklon (800), der so konfiguriert ist, dass er den Katalysator von einem Produkt des zweiten Reaktors (300) trennt;
eine Versorgungsleitung, die so konfiguriert ist, dass sie den abgeschiedenen Katalysator aus dem Zyklon (800) an den dritten Reaktor (500) zuführt; und
eine Rezirkulationsleitung, die so konfiguriert ist, dass sie den regenerierten Katalysator von dem dritten Reaktor (500) erneut an den zweiten Reaktor (300) zuführt.

15. Verfahren zur Herstellung eines flüssigen Kohlenwasserstoffs, wobei das Verfahren umfasst:
Herstellen von Synthesegas durch ein Verfahren nach einem der Ansprüche 1 bis 10;
Zuführen des Synthesegases an einen vierten Reaktor (900), der bevorzugt einen Festbettreaktor aufweist; und
Durchführen einer Fischer-Tropsch-Synthesereaktion in dem vierten Reaktor (900).

## Revendications

1. Procédé de fabrication d'un gaz de synthèse, le procédé comprenant :
(S1) le traitement thermique de déchets organiques sous hydrogène dans un premier réacteur ;
(S2) la séparation d'hydrogène d'un produit de (S1) et la récupération d'un premier gaz mixte dont l'hydrogène a été retiré ;
(S3) le reformage du premier gaz mixte récupéré en (S2) avec de la vapeur d'eau sous un catalyseur dans un deuxième réacteur ;
(S4) la séparation du catalyseur et du dioxyde de carbone d'un produit de (S3) et la récupération d'un second gaz mixte dont le dioxyde de carbone a été retiré ;
(S5) la conversion de dioxyde de carbone séparé en (S4) en monoxyde de carbone par le biais d'une réaction de Boudouard inversée dans un troisième réacteur ; et
(S6) le mélange d'hydrogène séparé en (S2), du second gaz mixte récupéré en (S4), et du monoxyde de carbone converti en (S5) pour produire un gaz de synthèse.

2. Procédé selon la revendication 1, dans lequel le produit de (S1) comporte du méthane, de l'hydrogène, du monoxyde de carbone, et du dioxyde de carbone, dans lequel de préférence 20 % en volume ou plus de méthane sont inclus par rapport au volume total du produit de (S1).

3. Procédé selon une quelconque revendication précédente, dans lequel le premier gaz mixte de (S2) comporte du méthane, du monoxyde de carbone, et du dioxyde de carbone, et le produit de (S3) comporte de l'hydrogène, du monoxyde de carbone, et du dioxyde de carbone.

4. Procédé selon une quelconque revendication précédente, dans lequel le catalyseur en (S3) est un catalyseur composite dans lequel un hybride métallique est supporté sur de la zéolite, dans lequel l'hybride métallique comporte de préférence au moins un élément choisi parmi du nickel, du vanadium, du fer, du platine, du palladium, ou du ruthénium, et dans lequel la zéolite comporte de préférence de la zéolite ZSM-5, ZSM-11, USY, de la ferriérite, de la mordénite, de la zéolite MCM-22, SUZ-4, ou du type L.

5. Procédé selon une quelconque revendication précédente, dans lequel (S5) comporte en outre :
(S5-1) l'introduction du catalyseur séparé en (S4) dans le troisième réacteur et la régénération du catalyseur par le biais d'une réaction de Boudouard inversée ; et
(S5-2) la recirculation et la re-fourniture du catalyseur régénéré en (S3).

6. Procédé selon une quelconque revendication précédente, dans lequel (S1) est réalisée à une température de 500 à 900°C et à une pression de 300 à 500 kPa.

7. Procédé selon une quelconque revendication précédente, dans lequel (S2) est réalisée à une température de 5 à 50°C et à une pression de 800 à 1200 kPa.

8. Procédé selon une quelconque revendication précédente, dans lequel la réaction de Boudouard inversée de (S5) est réalisée à une température de 800 à 1000°C et à une pression de 300 à 500 kPa.

9. Procédé selon une quelconque revendication précédente, dans lequel les déchets organiques en (S1) comprennent au moins un élément sélectionné parmi des déchets plastiques, des déchets solides, de la biomasse, de l'huile usée, ou des pneus usagés.

10. Procédé selon une quelconque revendication précédente, comprenant en outre : avant (S2), la purification du gaz mixte produit en (S1).

11. Appareil pour la fabrication d'un gaz de synthèse par un procédé selon une quelconque revendication précédente, l'appareil comprenant :
un premier réacteur (100) configuré pour recevoir un flux (1) comprenant des déchets organiques et permettre la réalisation d'une réaction de gazéification sous hydrogène ;
une unité de séparation d'hydrogène (200) configurée pour recevoir un produit du premier réacteur (100), pour séparer de l'hydrogène, et pour récupérer un premier gaz mixte dont l'hydrogène a été retiré ;
optionnellement, une unité de purification (700) entre le premier réacteur (100) et l'unité de séparation d'hydrogène (200) ;
un deuxième réacteur (300) configuré pour recevoir un premier gaz mixte dont l'hydrogène est retiré de l'unité de séparation d'hydrogène et permettre la réalisation d'une réaction de reformage de vapeur sous un catalyseur ; une unité de séparation de dioxyde de carbone (400) configurée pour recevoir un produit du deuxième réacteur (300), pour séparer le dioxyde de carbone, et pour récupérer un second gaz mixte dont le dioxyde de carbone a été retiré ;
un troisième réacteur (500) configuré pour recevoir du dioxyde de carbone séparé dans l'unité de séparation de dioxyde de carbone (400) et pour permettre la réalisation d'une réaction de Boudouard inversée ; et
une unité de production de gaz de synthèse (600) configurée pour recevoir et mélanger de l'hydrogène séparé dans l'unité de séparation d'hydrogène (200), un second gaz mixte récupéré de l'unité de séparation de dioxyde de carbone (400), et du monoxyde de carbone récupéré du troisième réacteur (500), et pour permettre une production de gaz de synthèse.

12. Appareil selon la revendication 11, dans lequel le premier réacteur (100) comporte un réacteur à lit fluidisé ou un réacteur à lit fixe ; et/ou dans lequel le deuxième réacteur (300) comporte un réacteur à lit fluidisé ; et/ou dans lequel le troisième réacteur (500) comporte un réacteur à lit fluidisé.

13. Appareil selon la revendication 11 ou 12, dans lequel l'unité de séparation d'hydrogène (200) comporte un dispositif d'adsorption modulée en pression (PSA).

14. Appareil selon l'une quelconque des revendications 11 à 13, comprenant en outre :
un cyclone (800) configuré pour séparer le catalyseur d'un produit du deuxième réacteur (300) ;
une ligne de fourniture configurée pour fournir le catalyseur séparé du cyclone (800) au troisième réacteur (500) ; et
une ligne de recirculation configurée pour refournir le catalyseur régénéré à partir du troisième réacteur (500) au deuxième réacteur (300).

15. Procédé de fabrication d'un hydrocarbure liquide, le procédé comprenant :
la fabrication de gaz de synthèse par un procédé selon l'une quelconque des revendications 1 à 10 ;
la fourniture du gaz de synthèse à un quatrième réacteur (900), comportant de préférence un réacteur à lit fixe ; et
la réalisation d'une réaction de synthèse de Fischer-Tropsch dans le quatrième réacteur (900).
